# EUROPÄISCHE PATENTSCHRIFT

(11) **EP 2 212 165 B1**
(45) Veröffentlichungstag und Bekanntmachung des Hinweises auf die Patenterteilung: **04.03.2015**
(21) Anmeldenummer: 08802847.7
(22) Anmeldetag: 09.10.2008
(51) Int. Cl.: B60T 8/36

(54) **ELEKTROPNEUMATISCHE VENTILEINRICHTUNG MIT IN DEN VENTILBLOCK GERICHTETEN PNEUMATISCHEN ANSCHLÜSSEN DER MAGNETVENTILE**
ELECTROPNEUMATIC VALVE DEVICE HAVING PNEUMATIC SOLENOID VALVE PORTS WHICH ARE DIRECTED INTO THE VALVE BLOCK
ENSEMBLE ÉLECTROVANNE PNEUMATIQUE À RACCORDEMENTS PNEUMATIQUES D'ÉLECTROVANNES DIRIGÉS VERS L'INTÉRIEUR DU BLOC DE VANNES

(30) Priorität: 18.10.2007 DE 102007049976
(43) Veröffentlichungstag der Anmeldung: 04.08.2010
(73) Patentinhaber: KNORR-BREMSE Systeme für Nutzfahrzeuge GmbH, 80809 München (DE)
(72) Erfinder: DEEG, Markus, 71735 Eberdingen (DE)
(74) Vertreter: Mattusch, Gundula
(86) Internationale Anmeldenummer: PCT/EP2008/008538
(87) Internationale Veröffentlichungsnummer: WO 2009/052955

(56) Entgegenhaltungen:
- EP-A- 0 872 396
- EP-A- 1 508 732
- DE-A1- 2 938 437
- DE-A1- 3 833 474
- DE-A1- 4 313 384
- DE-C2- 4 345 396

## Beschreibung

Die Erfindung geht aus von einer elektropneumatischen Ventileinrichtung eines Kraftfahrzeugs, gemäß dem Oberbegriff von Anspruch 1.

Im Falle von im Ventilblock aufgenommenen 3/2-Wegemagnetventilen, also von Magnetventilen mit drei pneumatischen Anschlüssen in Form eines Entlüftungsanschlusses, eines Vorratsdruckanschlusses sowie eines Arbeitsdruckanschlusses ist bei den bekannten Magnetventilen beispielsweise der Entlüftungsanschluss kopfseitig, d.h. zum elektrischen Teil weisend angeordnet. Dadurch befindet sich der Entlüftungsanschluss an der nicht von der Wandung der Öffnung des Ventilblocks umgebenen Stirnseite des Magnetventils, so dass die aus diesem stirnseitigen Entlüftungsanschluss entweichende Abluft beispielsweise durch eine separate Auffangkammer aufgefangen und in den zugeordneten Druckluftkanal im Ventilblock geleitet werden muss, was einen gewissen konstruktiven Aufwand mit sich bringt. Darüber hinaus befindet sich der stirnseitige Entlüftungsanschluss im Bereich der elektrischen, aus der Öffnung des Ventilblocks herausragenden Anschlusskontakte des Magnetventils bzw. im Bereich der Steuerungs- und Leistungselektronik, so dass die Gefahr besteht, dass die elektrischen Kontakte wie auch die Steuerungs- und Leistungselektronik durch in der Abluftströmung mitgeführte Schmutz- oder Ölpartikel verschmutzen und dadurch ein Funktionsausfall eintreten kann.

Eine gattungsgemäße elektromagnetische Ventileinrichtung ist aus der EP 1 508 732 A1 bekannt. Dort sind Magnetventilpatronen in einem Ventilblock aufgenommen, wobei jeweils drei pneumatische Druckluftanschlüsse am Umfang eines in der Öffnung aufgenommenen Eintauchabschnitts einer Magnetventilpatrone angeordnet sind. Elektrische Anschlusskontakte in Form von dünnen Kontaktstiften der im Ventilblock aufgenommenen Magnetventilpatronen zur Steuerung und Leistungsversorgung von deren Magnetspulen werden von einer Leiterplatte kontaktiert, welche in einem Ventilblockdeckel aufgenommen ist, der bei der Montage auf den Ventilblock aufgesetzt wird. Bei der Montage des auf den Ventilblock aufgesetzten Ventilblockdeckels, in welchem die Leiterplatte der Steuer- und Leistungselektronik aufgenommen ist, geraten die elektrischen Kontaktstifte der Magnetventilpatronen in Stecköffnungen der Leiterplatte im Ventilblockdeckel, um einen elektrischen Kontakt mit der Leiterplatte herzustellen.

In ähnlicher Weise werden auch gemäß EP 0872 396 A2 und DE 29 38 437 A1 elektrische Verbindungen zwischen den in einem Ventilblock aufgenommenen Magnetventilen und einer elektronischen Steuerschaltung in Form einer Leiterplatte hergestellt, indem ein die Leiterplatte tragender Ventilblockdeckel auf den Ventilblock aufgesetzt wird, wobei von den Magnetventilen nach oben weg ragende Leiterfahnen bzw. Kontaktstifte in leiterplattenseitige Stecklöcher eingreifen.

Jedoch müssen sich dann bei der Montage die Stecköffnungen in der Leiterplatte exakt mit den Kontaktstiften der Magnetventile in Flucht befinden, weil andernfalls keine Montage des Ventilblockdeckels auf dem Ventilblock möglich ist. Bei mehreren solcher in einem Ventilblock aufgenommenen Magnetventilen gestaltet sich ein solches Ausrichten bzw. in Flucht zueinander bringen schwierig, zumal die dünnen Kontaktstifte dabei leicht verbiegen können. Nicht zuletzt sind dann hohe Anforderungen an die Lagetoleranzen der Kontaktstifte bzw. der zugeordneten Stecköffnungen zu stellen.

Der Erfindung liegt demgegenüber die Aufgabe zugrunde, eine elektropneumatische Ventileinrichtung der eingangs erwähnten Art derart weiter zu bilden, dass sie einfacher und kostengünstiger zu fertigen ist sowie eine höhere Ausfallsicherheit aufweist.

Erfindungsgemäß wird diese Aufgabe durch die Merkmale des Patentanspruchs 1 gelöst.

### Offenbarung der Erfindung

Gemäß Patentanspruch 1 sind alle drei pneumatischen Druckluftanschlüsse am Umfang eines in der Öffnung aufgenommenen Eintauchabschnitts des 3/2-Wege-Magnetventils angeordnet. Dann können zum einen alle Druckluftanschlüsse des Magnetventils automatisch zusammen mit dem Einführen des 3/2-Wege-Magnetventils in die Öffnung in Flucht mit den Mündungen der zugeordneten Druckluftkanäle im Ventilblock u.U. nach gegeneinander Verdrehen geraten, so dass sämtliche pneumatischen Verbindungen in einem Arbeitsschritt herstellbar sind. Dann ist keine kopfseitige Auffangkammer für die Abluft des Entlüftungsanschlusses mehr notwendig, weil diese Abluft nun seitlich, über die Mündung des zugeordneten Druckluftkanals in der Wandung der Öffnung direkt in den Ventilblock abgeführt wird. Dies reduziert gegenüber dem Stand der Technik auch die Anzahl der Dichtstellen.

Bedingt durch die direkten seitlichen oder am Umfang angeordneten pneumatischen Verbindungen zwischen dem 3/2-Wege-Magnetventil und dem Ventilblock wird die Gefahr der Verschmutzung der weiterhin vorzugsweise stirnseitig am 3/2-Wege-Magnetventil angeordneten elektrischen Kontakte bzw. der Steuerungs- und Leistungselektronik beispielsweise durch die durch einen pneumatischen Entlüftungsanschluss abgeblasene Abluft reduziert, da diese stirnseitigen Kontakte nun entfernt von der Führung der Abluft angeordnet sind.

Gemäß der Erfindung sind der wenigstens eine elektrische Anschluss des 3/2-Wege-Magnetventils sowie ein diesem zugeordneter ventilblockseitiger elektrischer Gegenanschluss der Leistungs- und/oder Steuerungselektronik derart angeordnet und ausgebildet, dass gleichzeitig mit dem Einsetzen des Eintauchabschnitts des 3/2-Wege-Magnetventils in die Öffnung des Ventilblocks nicht nur alle drei pneumatischen Druckluftanschlüsse des 3/2-Wege-Magnetventils mit den zugeordneten Druckluftkanälen im Ventilblock in druckluftleitende Verbindung geraten, sondern auch der elektrische Anschluss des 3/2-Wege-Magnetventils mit dem zugeordneten ventilblockseitigen elektrischen Gegenanschluss der Leistungs- und/oder Steuerungselektronik in elektrisch leitenden Kontakt gerät. Dann kommen im Rahmen eines einzigen Montageschritts, nämlich mit dem Einsetzen des 3/2-Wege-Magnetventils in die Öffnung im Ventilblock sowohl die pneumatischen als auch die elektrischen Anschlüsse miteinander in Verbindung, was den Montageaufwand vorteilhaft reduziert, was in einer einfachen und kostengünstigen Fertigung der Ventileinrichtung resultiert.

Die Öffnung weist eine kopfseitige Stufe auf, an deren Stirnfläche der elektrische Gegenanschluss ausgebildet ist. Weiterhin ragt der elektrische Anschluss des 3/2-Wege-Magnetventils von diesem seitlich weg und weist in vertikale Richtung weisende Kontaktstifte auf, welche dann gleichzeitig mit dem Einsetzen des 3/2-Wege-Magnetventils mit dem Gegenanschluss in Kontakt treten.

Der ventilblockseitige Gegenanschluss steht wiederum mit einem ventilblockseitigen elektrischen Anschluss für die Leistungs- und/oder Steuerungselektronik beispielsweise mittels eines Stanzgitters in elektrisch leitender Verbindung, welcher gleichzeitig mit dem Verbinden der Leistungs- und/oder Steuerungselektronik mit dem Ventilblock mit einem zugeordneten Gegenanschluss der Leistungs- und/oder Steuerungselektronik in elektrisch leitende Verbindung gebracht wird. Dazu ragt der Gegenanschluss von einem Gehäuse der Leistungs- und/oder Steuerungselektronik bodenseitig weg, welches auf den Ventilblock aufgesetzt wird.

Damit wird die elektrische Verbindung zwischen dem 3/2-Wege-Magnetventil und der Leistungs- und/oder Steuerungselektronik gleichzeitig mit dem Aufsetzen des Gehäuses der Leistungs- und/oder Steuerungselektronik auf den Ventilblock hergestellt, was den Montageaufwand weiter reduziert.

Durch die in den Unteransprüchen aufgeführten Maßnahmen sind vorteilhafte Weiterbildungen und Verbesserungen der in den unabhängigen Ansprüchen angegebenen Erfindung möglich.

### Zeichnungen

Ein Ausführungsbeispiel der Erfindung ist in der Zeichnung dargestellt und in der nachfolgenden Beschreibung näher erläutert. In der Zeichnung zeigt
- Fig.1: eine schematische Darstellung einer elektropneumatischen Ventileinrichtung;
- Fig.2: eine schematische Darstellung einer elektropneumatischen Ventileinrichtung gemäß einer bevorzugten Ausführungsform der Erfindung.

### Beschreibung des Ausführungsbeispiels

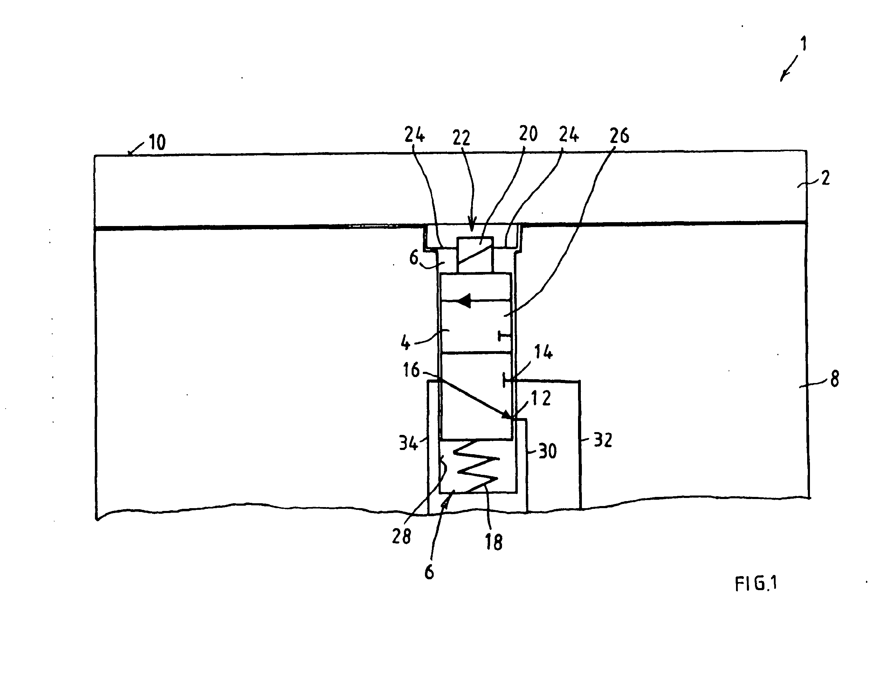

In Fig.1 ist ein nicht erfindungsgemäßes Ausführungsbeispiel einer elektropneumatischen Ventileinrichtung 1 eines Kraftfahrzeugs gezeigt, welche vorzugsweise ein achs- oder radbezogenes Druckregelmodul einer elektropneumatischen Bremseinrichtung eines Nutzfahrzeugs ist. Ein solches Druckregelmodul 1 beinhaltet in der Regel ein elektronisches Steuergerät 2, welches eines oder mehrere elektrisch betätigte Magnetventile 4 ansteuert, um einen Bremsdruck für ein Rad oder die Räder einer Achse auf einen auf einer Bremsdruckanforderung beruhenden Sollbremsdruck einzuregeln. Der Übersichtlichkeit halber ist in Fig.1 von dem Druckregelmodul 1 lediglich das Steuergerät 2 und ein Magnetventil 4 gezeigt, welches in einer Öffnung 6 eines Ventilblocks 8 aufgenommen ist.

Das Steuergerät 2 beinhaltet eine Leistungs- und/oder Steuerungselektronik und ist in einem Steuergerätgehäuse 10 untergebracht, das vorzugsweise kopfseitig auf den Ventilblock 8 aufgesetzt und mit diesem lösbar verbunden ist. Das Magnetventil 4 ist ein direkt gesteuertes 3/2-Wegemagnetventil, d.h. es hat genau drei pneumatische Anschlüsse und zwei Schaltstellungen. Beispielsweise ist ein Entlüftungsanschluss 12, ein Vorratsdruckanschluss 14 sowie ein Arbeitsdruckanschluss 16 vorhanden, wobei in einer ersten, in Fig.1 gezeigten Schaltstellung der Arbeitsdruckanschluss 16, welcher beispielsweise mit einem Bremszylinder in Verbindung steht und den ausgesteuerten Bremsdruck führt, mit dem Entlüftungsanschluss 12 in Strömungsverbindung steht, um Bremsdruck abzubauen und in einer zweiten Schaltstellung mit dem Vorratsdruckanschluss 14, um Bremsdruck aufzubauen. In der ersten Schaltstellung ist demgegenüber der Vorratsdruckanschluss 14 und in der zweiten Schaltstellung der Entlüftungsanschluss 12 gesperrt. Weiterhin ist das 3/2-Wegemagnetventil 4 in die erste oder die zweite Schaltstellung durch eine Federeinrichtung 18 federbelastet. Schließlich ist ein Elektromagnet 20 vorhanden, der ein nicht gezeigtes Ventilglied abhängig von elektrischen Steuersignalen betätigt, welches er über vorzugsweise an der kopfseitigen und zum Steuergerät weisenden Stirnfläche 22 des 3/2-Wegemagnetventils 4 angeordnete elektrische Anschlüsse 24 vom Steuergerät 2 erhält.

Das 3/2-Wegemagnetventil 4 weist einen Eintauchabschnitt 26 auf, mit dem es in die Öffnung 6 des Ventilblocks 8 eintaucht oder dort aufgenommen ist, d.h. dass im montierten Zustand des 3/2-Wegemagnetventils 4 der Eintauchabschnitt 26 von einer Wandung 28 der Öffnung 6 umgeben ist. Bevorzugt ist das 3/2-Wegemagnetventil 4 in axialer, d.h. in Fig.1 in vertikaler Richtung gesehen im wesentlichen vollständig in der Öffnung 6 aufgenommen, lediglich die elektrischen Anschlüsse 24 oder Kontakte ragen noch aus der Öffnung 6 heraus. Dann entspricht der Eintauchabschnitt 26 im wesentlichen der axialen Länge des 3/2-Wegemagnetventils 4. Alternativ könnte das 3/2-Wegemagnetventil 4 kopfseitig auch ein Stück weit aus der Öffnung 6 des Ventilblocks 8 herausragen. Zur Montage wird das 3/2-Wegemagnetventil 4 also bis zu einem Anschlag in die Öffnung 6 des Ventilblocks 8 vorzugsweise linear eingeschoben. Dann befindet es sich in montierter Endstellung.

In montierter Endstellung des 3/2-Wegemagnetventils 4 in der Öffnung 6, welche beispielsweise gestuft ausgeführt ist und dadurch axiale Anschläge für das 3/2-Wegemagnetventil 4 ausbildet, geraten die drei pneumatischen Anschlüsse 12, 14, 16 des 3/2-Wegemagnetventils 4 mit zugeordneten Druckluftkanälen 30, 32, 34 im Ventilblock 8 in Flucht und damit in druckluftleitende Verbindung. Diese Druckluftkanäle 30, 32, 34 führen dann entweder zu einem Druckluftvorrat, einer Entlüftung oder zu einem Bremszylinder. Mit anderen Worten werden gleichzeitig mit dem Einsetzen des 3/2-Wege-Magnetventil 4 in die Öffnung 6 alle drei pneumatischen Druckluftanschlüsse 12, 14, 16 mit den zugeordneten Druckluftkanälen 30, 32, 34 im Ventilblock 8 in druckluftleitende Verbindung gebracht.

Wesentlich ist, dass alle pneumatischen Druckluftanschlüsse 12, 14, 16 am Umfang des in der Öffnung 6 aufgenommenen Eintauchabschnitts 26 des 3/2-Wegemagnetventils 4 angeordnet sind. Insbesondere soll kein pneumatischer Druckluftanschluss 12, 14 oder 16 an der zum Steuergerät 2 oder den elektrischen Anschlüssen 24 weisenden freien Stirnfläche 22 des 3/2-Wegemagnetventils 4 oder an einem unter Umständen aus der Öffnung 6 ragenden Abschnitt des 3/2-Wegemagnetventils 4 angeordnet sein.

Insbesondere sind die Mündungen der Druckluftanschlüsse 12, 14, 16 und die Mündungen der Druckluftkanäle 30, 32, 34 querschnittsgleich ausgeführt und befinden sich auf gedachten Zylinderflächen, deren Mittelachsen koaxial mit einer Mittelachse der Öffnung sind, so dass bei deren Überdeckung eine druckdichte pneumatische Verbindung zustande kommt.

Dann können zum einen die drei Druckluftanschlüsse 12, 14, 16 des 3/2-Wegemagnetventils 4 automatisch zusammen mit dem Einführen des 3/2-Wegemagnetventils 4 in die Öffnung 6 in Flucht mit den Mündungen der zugeordneten Druckluftkanäle 30, 32, 34 im Ventilblock 8 geraten. Wenn dies ohne nachträgliches Verdrehen des 3/2-Wegemagnetventils 4 in der Öffnung 6 geschehen soll, ist eine geeignete Umfangszentrierung des 3/2-Wegemagnetventils 4 gegenüber der Öffnung 6 vorzusehen, so dass sämtliche pneumatischen Verbindungen in einem Arbeitsschritt herstellbar sind.

Bedingt durch die direkte seitliche Abfuhr der Abluft über den Entlüftungsanschluss 12 in den Druckluftkanal 30 des Ventilblocks 8 wird zum andern die Gefahr der Verschmutzung der vorzugsweise stirnseitig am 3/2-Wegemagnetventil 4 angeordneten elektrischen Kontakte 24 bzw. der Steuerungs- und Leistungselektronik im Steuergerät 2 reduziert, da diese nun entfernt von der Führung der Abluft angeordnet sind.

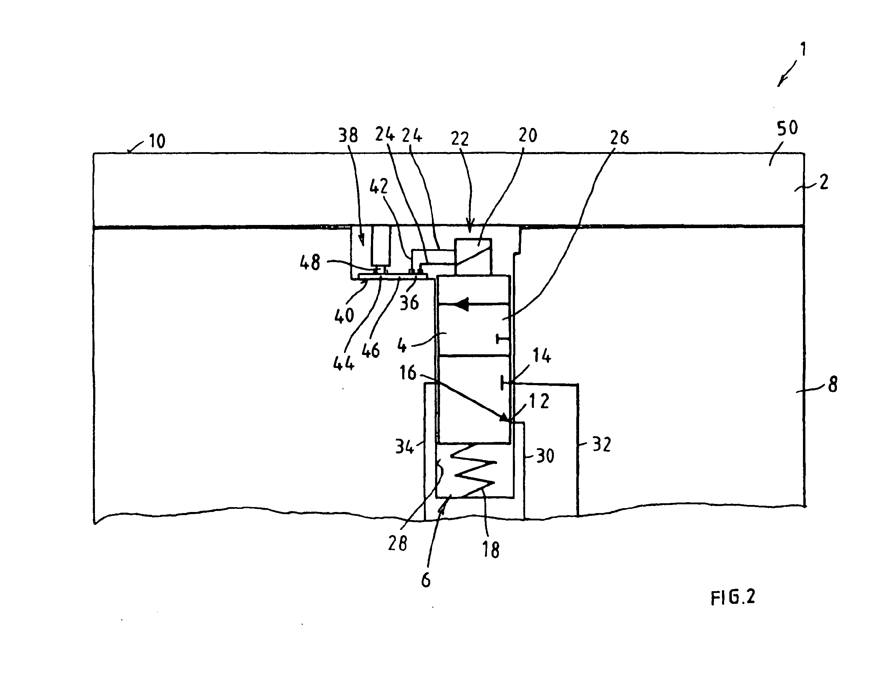

Bei einem bevorzugten Ausführungsbeispiel der Erfindung nach Fig.2 sind die gegenüber der vorhergehend beschriebenen Ventileinrichtung gleich bleibenden und gleich wirkenden Teile durch die gleichen Bezugszeichen gekennzeichnet. Bei dem bevorzugten Ausführungsbeispiel von Fig.2 sind die elektrischen Anschlüsse 24 des 3/2-Wege-Magnetventils 4 sowie diesen zugeordnete, ventilblockseitige elektrische Gegenanschlüsse 36 der Leistungs- und/oder Steuerungselektronik 2 derart angeordnet und ausgebildet, dass gleichzeitig mit dem Einsetzen des Eintauchabschnitts 26 des 3/2-Wege-Magnetventils 4 in die Öffnung 6 des Ventilblocks 8 nicht nur alle drei pneumatischen Druckluftanschlüsse 12, 14, 16 des 3/2-Wege-Magnetventils 4 mit den zugeordneten Druckluftkanälen 30, 32, 34 im Ventilblock 8 in druckluftleitende Verbindung geraten, sondern auch die elektrischen Anschlüsse 24 mit den zugeordneten ventilblockseitigen elektrischen Gegenanschlüssen 36 in elektrisch leitenden Kontakt geraten.

Dies kann beispielsweise dadurch realisiert sein, dass die Öffnung 6 eine kopfseitige Stufe 38 aufweist, an deren Stirnfläche 40 beispielsweise die elektrischen Gegenanschlüsse 36 ausgebildet ist. Weiterhin können die elektrischen Anschlüsse 24 des 3/2-Wege-Magnetventils 4 von diesem seitlich wegragen und beispielsweise in vertikale Richtung weisende Kontaktstifte 42 aufweisen, welche dann gleichzeitig mit dem Einsetzen des 3/2-Wege-Magnetventils 4 in die Öffnung 6 mit den ventilblockseitigen Gegenanschlüssen 36 in Kontakt treten. Ebenso kann eine elektrische Verbindung zwischen dem 3/2-Wegemagnetventil und dem Ventilblock durch eine Stecker-Gegensteckerverbindung hergestellt werden, wobei der Stecker mit dem Gegenstecker gleichzeitig mit dem Einsetzen des 3/2-Wege-Magnetventils 4 in die Öffnung 6 elektrisch verbunden wird.

Die ventilblockseitigen elektrischen Gegenanschlüsse 36 können wiederum mit einem ventilblockseitigen elektrischen Anschluss 44 für die Leistungs- und/oder Steuerungselektronik 2 beispielsweise mittels eines Stanzgitters 46 in elektrisch leitender Verbindung stehen, welcher gleichzeitig mit dem Verbinden der Leistungs- und/oder Steuerungselektronik 2 mit dem Ventilblock 8 mit einem zugeordneten Gegenanschluss 48 der Leistungs- und/oder Steuerungselektronik 2 in elektrisch leitende Verbindung gerät. Dazu könnte der Gegenanschluss 48 von einem Gehäuse 50 der Leistungs- und/oder Steuerungselektronik 2 bodenseitig nach unten weg ragen, welches auf den Ventilblock 8 aufgesetzt wird. Ebenso kann die elektrische Verbindung auch hier durch eine Stecker-Gegensteckerverbindung hergestellt werden, wobei der Stecker mit dem Gegenstecker gleichzeitig mit dem Aufsetzen des Gehäuses 50 der Leistungs- und/oder Steuerungselektronik 2 auf den Ventilblock 8 elektrisch verbunden wird.

### Bezugszahlenliste

- 1: Druckregelmodul
- 2: Steuergerät
- 4: Magnetventil
- 6: Öffnung
- 8: Ventilblock
- 10: Steuergerätgehäuse
- 12: Entlüftungsanschluss
- 14: Vorratsdruckanschluss
- 16: Arbeitsdruckanschluss
- 18: Federeinrichtung
- 20: Elektromagnet
- 22: Stirnfläche
- 24: Elektrische Anschlüsse
- 26: Eintauchabschnitt
- 28: Wandung
- 30: Druckluftkanal
- 32: Druckluftkanal
- 34: Druckluftkanal
- 36: Gegenanschluss
- 38: Stufe
- 40: Stirnfläche
- 42: Kontaktstifte
- 44: Anschluss
- 46: Stanzgitter
- 48: Gegenanschluss
- 50: Gehäuse

## Patentansprüche

1. Elektropneumatische Ventileinrichtung (1) eines Kraftfahrzeugs beinhaltend einen Ventilblock (8) mit wenigstens einer Öffnung (6), in welcher ein 3/2-Wege-Magnetventil (4) mit einem Eintauchabschnitt (26) aufgenommen ist, das drei pneumatische, mit zugeordneten Druckluftkanälen (30, 32, 34) im Ventilblock (8) in druckluftleitende Verbindung bringbare Druckluftanschlüsse (12, 14, 16) und wenigstens einen elektrischen Anschluss (24) aufweist, und eine Leistungs- und/oder Steuerungselektronik (2), die mit dem Ventilblock (8) verbunden ist und über den elektrischen Anschluss (24) wenigstens einen Elektromagneten (20) des 3/2-Wege-Magnetventils (4) elektrisch steuert, wobei alle drei pneumatischen Druckluftanschlüsse (12, 14, 16) am Umfang eines in der Öffnung (6) aufgenommenen Eintauchabschnitts (26) des Magnetventils (4) angeordnet sind, **dadurch gekennzeichnet, dass** der wenigstens eine elektrische Anschluss (24) des 3/2-Wege-Magnetventils (4) sowie ein diesem zugeordneter ventilblockseitiger elektrischer Gegenanschluss (36) der Leistungs- und/oder Steuerungselektronik (2) derart angeordnet und ausgebildet sind, dass gleichzeitig mit dem Einsetzen des Eintauchabschnitts (26) des 3/2-Wege-Magnetventils (4) in die Öffnung (6) des Ventilblocks (8) nicht nur alle drei pneumatischen Druckluftanschlüsse (12, 14, 16) des 3/2-Wege-Magnetventils (4) mit den zugeordneten Druckluftkanälen (30, 32, 34) im Ventilblock (8) in druckluftleitende Verbindung geraten, sondern auch der elektrische Anschluss (24) des 3/2-Wege-Magnetventils (4) mit einem zugeordneten ventilblockseitigen elektrischen Gegenanschluss (36) der Leistungs- und/oder Steuerungselektronik (2) in elektrisch leitenden Kontakt gerät, wobei die Öffnung (6) eine kopfseitige Stufe (38) aufweist, an welcher der elektrische Gegenanschluss (36) der Leistungs- und/oder Steuerungselektronik (2) ausgebildet ist und der elektrische Anschluss (24) von dem 3/2-WegeMagnetventil (4) seitlich wegragt, sowie der elektrische Gegenanschluss (36) mit einem ventilblockseitigen elektrischen Anschluss (44) in elektrisch leitender Verbindung steht, welcher gleichzeitig mit dem Verbinden der Leistungs- und/oder Steuerungselektronik (2) mit dem Ventilblock (8) mit einem zugeordneten Gegenanschluss (48) der Leistungs- und/oder Steuerungselektronik (2) in elektrisch leitende Verbindung gerät und der Gegenanschluss (48) von einem Gehäuse (50) der Leistungs- und/oder Steuerungselektronik (2) bodenseitig weg ragt, welches auf den Ventilblock (8) aufgesetzt ist.

2. Elektropneumatische Ventileinrichtung nach Anspruch 1, **dadurch gekennzeichnet, dass** die pneumatischen Anschlüsse des 3/2-Wegemagnetventils einen Entlüftungsanschluss (12), einen Vorratsdruckanschluss (14) sowie einen Arbeitsdruckanschluss (16) aufweisen.

3. Elektropneumatische Ventileinrichtung nach Anspruch 1 oder 2, **dadurch gekennzeichnet, dass** die Öffnung (6) und das Magnetventil (4) derart gegeneinander zentriert sind, dass nur eine einzige Montageposition möglich ist, in welcher sich die pneumatischen Druckluftanschlüsse (12, 14, 16) an der Umfangsfläche des Magnetventils (4) mit in der Wandung der Öffnung (6) angeordneten Mündungen der Druckluftkanäle (30, 32, 34) in Flucht befinden.

## Claims

1. Electro-pneumatic valve device of a motor vehicle, including a valve block (8) with at least one opening (6) in which a 3/2 way solenoid valve (4) with a plunger portion (26) is accommodated, which is provided with three pneumatic compressed-air connections (12, 14, 16) adapted to be switched in compressed-air conducting connection with associated compressed-air ducts (30, 32, 34) in said valve block (8), and at least one electrical connector (24), and including an electronic power and/or control module (2) connected to said valve block (8) and electrically controlling at least one solenoid (20) of said 3/2-way solenoid valve via said electrical connector (24), with all three pneumatic compressed-air connections (12, 14, 16) being disposed on the periphery of a plunger portion (26) of said solenoid valve (4), which is accommodated in said opening (6), **characterized in that** said at least one electrical connector (24) of said 3/2-way solenoid valve (4) as well as an associated electrical counter-connector of said electronic power and/or control module (2) on the side of said valve block are arranged and configured in such a way that simultaneously with insertion of said plunger portion (26) of said 3/2-way solenoid valve (4) into said opening (6) of said valve block (8) not only all three pneumatic compressed-air connections (12, 14, 16) of said 3/2-way solenoid valve (4) are switched into compressed-air connection with the associated compressed-air ducts (30, 32, 34) in said valve block (8), but also said electrical connector (24) of said 3/2-way solenoid valve (4) is switched into electrically conducting contact with an associated electrical counter connector (36) of said electronic power and/or control module (2), with said opening (6) being provided with a step (38) on the head side, on which said electrical counter connector (36) of said electronic power and/or control module (2) is formed whilst said electrical connector (24) projects laterally away from said 3/2-way solenoid valve (4) and said electrical counter connector (36) is in an electrically conductive connection with an electrical connector (4) on the side of said valve block, which, simultaneously with the connection of said electronic power and/or control module (2) with said valve block (8), is switched into an electrically conductive connection with an associated counter connector (48) of said electronic power and/or control module (2) whereas said counter connector (48) projects away from a housing (50) of said electronic power and/or control module (2) on the bottom side, which module is placed onto said valve block (8).

2. Electro-pneumatic valve device according to Claim 1, **characterized in that** said pneumatic connections of said 3/2-way solenoid valve are provided with an aerating connector (12), a supply pressure connector (14) as well as a working pressure connector (16).

3. Electro-pneumatic valve device according to Claim 1 or 2, **characterized in that** said opening (6) and said solenoid valve (4) are centred with respect to each other in such a way that only a single mounting position is permitted in which said pneumatic compressed-air connections (12, 14, 16) on the peripheral area of said solenoid valve (4) are aligned with openings of said compressed-air ducts (30, 32, 34) disposed in the wall of said opening (6).

## Revendications

1. Ensemble électrovanne pneumatique d'un véhicule à moteur, contenant un bloc de vannes (8) à au moins une ouverture (6), dans laquelle une électrovanne à 3/2 voies (4) à une partie immersible (26) est reçue, qui est muni de trois raccordements d'air comprimé pneumatiques (12, 14, 16), qui sont aptes à être porté en une connexion de conduite d'air comprimé avec des conduites d'air comprimé (30, 32, 34) dans ledit bloc de vannes (8), et au moins un connecteur électrique (24), et contenant un module électronique de puissance et/ou de commande (2) relié audit bloc de vannes (8) et commandant, par voie électrique, au moins un électro-aimant de ladite électrovanne à 3/2 voies via ledit connecteur électrique (24), aux tous les trois raccordements pneumatiques d'air comprimé (12, 14, 16) étant disposés à la périphérie d'une partie immersible (26) de ladite électrovanne (4), qui est reçue dans ladite ouverture (6), **caractérisé en ce qu'**au moins un connecteur électrique (24) de ladite électrovanne à 3/2 voies (4) ainsi qu'un contre-connecteur électrique y affecté dudit module électronique de puissance et/ou de commande (2) du côté dudit bloc de vannes sont disposés et configurés d'une telle manière, qu'en même temps que l'insertion de ladite partie immersible (26) de ladite électrovanne à 3/2 voies (4) dans ladite ouverture (6) dudit bloc de vannes (8), non seulement tous les trois raccordements pneumatiques d'air comprimé (12, 14, 16) de ladite électrovanne à 3/2 voies (4) sont portés en connexion de conduite de l'air comprimé avec les conduites d'air comprimé (30, 32, 34) y affectés dans ledit bloc de vannes (8), mais aussi ledit connecteur électrique (24) de ladite électrovanne à 3/2 voies (4) est porté en contact à conduction électrique avec un contre-connecteur (36) électrique y affecté dudit module électronique de puissance et/ou de commande (2), à ladite ouverture (6) étant munie d'un élément échelon (38) du côté de la tête, sur lequel ledit contre-connecteur électrique (36) dudit module électronique de puissance et/ou de commande (2) est formé, pendant que ledit connecteur électrique (24) fait saillie latéralement à partir de ladite électrovanne à 3/2 voies (4) et ledit contre-connecteur électrique (36) se trouve en connexion à conduction électrique avec un connecteur électrique (4) du côté du bloc de vannes, qui, en même temps que la connexion dudit module électronique de puissance et/ou de commande (2) avec ledit bloc de vannes (8), est porté en connexion à conduction électrique avec un contre connecteur (48) y affecté dudit module électronique de puissance et/ou de commande (2), pendant que ledit contre connecteur (48) fait saillie à partir d'un carter (50) dudit module électronique de puissance et/ou de commande (2) du côté de fond, à ce module étant placé sur ledit bloc de vannes (8).

2. Ensemble électrovanne pneumatique selon la revendication 1, **caractérisé en ce que** lesdites connexions pneumatiques de ladite électrovanne à 3/2 voies sont munies d'un connecteur de purge (12), d'un connecteur de pression de réserve (14) ainsi que d'un connecteur de pression de travail (16).

3. Ensemble électrovanne pneumatique selon la revendication 1 ou 2, **caractérisé en ce que** ladite ouverture (6) et ladite électrovanne (4) sont centrées l'une relativement à l'autre d'une telle manière, que seulement une seule position de montage soit permise, dans laquelle lesdits raccordements d'air comprimé (12, 14, 16) sur la zone périphérique de ladite électrovanne (4) sont alignés sur des bouches desdites conduites d'air comprimé (30, 32, 34) disposées dans la paroi de ladite ouverture (6).
